# EUROPEAN PATENT APPLICATION

(11) **EP 2 417 856 A1**
(43) Date of publication of application: **15.02.2012**
(21) Application number: 11177338.8
(22) Date of filing: 11.08.2011
(51) Int. Cl.: A21D 13/08, A23G 3/20, A23P 1/08

(54) **Apparatus and process for flavouring food products**

(30) Priority: 12.08.2010 GB 1013540
(71) Applicant: Koninklijke Verkade N.V., 1506 GA Zaandam (NL)
(72) Inventor: Van Son, Matthieu, 1506 GA Zaandam (NL); Kuiper, Dick, 1506 GA Zaandam (NL)
(74) Representative: Humphreys, Ceris Anne

(57) **Abstract**

An apparatus and process for flavouring food products comprises a conveyor device (3) for conveying a multiplicity of biscuits along a longitudinal path and a flavouring station (5) for applying flavouring composition to biscuits after they have been baked, the flavouring station (5) comprising a flavour delivery device having an array of delivery heads (11), each delivery head including a nozzle (12) defining a delivery aperture for the delivery of liquid. The delivery device is arranged to deliver a liquid flavouring composition to the surface of the biscuits via each delivery aperture at a flow rate of from 0.25 to 6 ml per minute.

## Description

The invention relates to an apparatus and process for applying flavouring composition to biscuits, and to biscuits made by the process.

Biscuits are known in many forms, and in general are made by making a biscuit mixture and baking portions of the mixture in an oven to obtain the biscuits, which are typically of substantially planar configuration, and generally relatively brittle. Sweet and semisweet biscuits are made from biscuit doughs, typically containing as principal ingredients biscuit flour, fat and sugar, and generally including raising agent. Some biscuit doughs can be sheeted, with individual pieces being cut from the dough and baked to form the biscuits. In the case of "short" doughs, individual pieces may be formed from the dough in a mould, for example a rotary mould arranged to receive, and divide from the main body of dough, an individual portion of dough, which is then expelled onto a conveyor for subsequent baking. Yet further doughs may be formed into individual pieces by extrusion, the extrudate being cut to form the individual pieces before baking. In the USA, and increasingly elsewhere, the term "cookie" is used to refer to some types of biscuit. Wafers, which are to be understood to be biscuits in the context of this specification, are typically made from a batter. Savoury biscuits are also known, for example, crackers. Savoury biscuits contain little or no sugar and may contain less fat than sweet biscuits, and in the context of this specification are to be understood as including oat crackers of the kind known as "oatcakes". The term "biscuit" as used herein is to be understood as extending to savoury biscuits and cookies as well as sweet and semisweet biscuits, and cereal bars. For the avoidance of doubt the term "biscuit" as used herein excludes cake. As compared with cake products biscuits are characterised by greater hardness, brittleness, and a harder and less compressible crumb structure.

It is known to incorporate a flavouring composition in a biscuit dough to impart a flavour to the biscuit. During manufacture, the flavouring composition is incorporated in the dough mixture with the other ingredients, and individual portions of the dough are formed and baked. Baking is typically carried out at temperatures in excess of 150°C, and often in excess of 170°C. The amounts and composition of the flavouring composition used in the dough have to be so chosen that, in the baked biscuit, the desired flavour intensity and tones are experienced by the consumer. Further, there is an ever-increasing need for ways of making food products such as biscuits economically.

The present invention provides an apparatus for flavouring biscuits, comprising:
a conveyor device for conveying a multiplicity of biscuits along a longitudinal path; and
a flavouring station comprising a flavour delivery device having an array of delivery apertures, the array being arranged above, and extending transversely across, said longitudinal path;
wherein the delivery device is arranged to deliver to the surface of the biscuits a liquid flavouring composition via each delivery aperture at a flow rate of from 0.25 to 6 ml per minute.

In the apparatus of the invention means are provided for applying flavouring composition to biscuits after they have been baked. It has been the widely held view in the art for many years that the application of flavouring to a biscuit after baking is unsatisfactory. For example, Technology of Biscuits, Crackers and Cookies 2nd Edition, Manley, pub. Ellis Horwood 1991, Chapter 15 "Flavours, spices and flavour enhancers" mentions various disadvantages of applying flavour after baking:
● The systems used tend to be messy and cause strong odours in the vicinity
● The techniques generally are not ideal for thick products like biscuits as the flavour lies on the surface and must either be very strong to give an acceptable overall taste or rely heavily on an initial taste impression.
● Surface films of oil and flavour are susceptible to oxidative rancidity, having consequences for packaging and estimates of shelf life.

Using the apparatus according to the invention, it has been found that, surprisingly, it is possible to make flavoured biscuits in which the flavouring is applied to the exterior surface of the biscuit, after baking, the flavoured biscuits so produced unexpectedly giving rise to an advantageous sensory perception of the flavour. The inventors have recognised that, in use of the conventional flavourings incorporated into the dough before baking, a material proportion of the flavouring composition, preferentially those components with relatively high volatility, can be lost during baking by evaporation or by modification of the flavour characteristics through heat-induced reactions occurring at the baking temperature. They have found that, using the apparatus of the invention, relatively small amounts of flavouring composition can be used relative to the amounts used in pre-baking flavouring, and the delivery in individual streams at low flow rates avoids the messiness encountered in prior art processes. Biscuits having advantageous flavour characteristics can thus be produced with, overall, less flavour composition than used in a comparable biscuit using pre-baking flavouring. Since flavouring compositions can be relatively costly, that provides an economical and effective way of flavouring a biscuit. It also reduces or eliminates the presence of the volatiles in exhaust gases thereby reducing potential wastage and pollution. Whilst it is an advantage of the present invention that a good level of flavouring can be produced with relatively little flavouring composition, the present invention does not exclude the use of flavouring composition in the same amounts as those used for pre-baking flavouring for inducing a more intense flavour than in the previously known biscuits. Also, it is within the scope of the invention to apply flavour to a biscuit that includes flavouring that had been incorporated in the biscuit mixture before baking. It will be appreciated that, in those circumstances, the amount of flavouring incorporated in the mixture may be reduced, as compared with conventional pre-baking flavoured biscuits.

Advantageously, the arrangement is such that the array of delivery apertures delivers from 0.01 to 0.15g flavouring per biscuit that passes under the array, preferably 0.015 to 0.125g, for example, 0.02 to 0.108 g flavouring per biscuit that passes under the array. Advantageously, the arrangement is such that the array of delivery apertures delivers from 0.0005 to 0.0100g flavouring per g of biscuit, preferably from 0.0010 to 0.009g, for example, 0.0014 to 0.0075 g flavouring per g of biscuit. A biscuit with good sensory characteristics, especially flavour, can thus be produced, especially for stronger flavourings, with as little as 0.0014 g flavouring composition per g biscuit or 0.02 g per biscuit. For example, in one embodiment it has been possible to reduce the amount of flavouring by about 20 to 30% relative to a similar biscuit made by incorporating flavouring in the biscuit mixture before baking.

Advantageously, the apparatus is arranged to deliver the flavour composition from each delivery aperture at a rate of from 0.75 to 5 ml per minute, preferably 1 to 4 ml per minute. Advantageously, the conveyor device is arranged to convey a multiplicity of longitudinal rows of biscuits. In that case, the array of delivery apertures advantageously comprises a sub-array of delivery apertures corresponding to each longitudinal row of biscuits, each sub-array comprising two or more delivery apertures. Preferably each sub-array of delivery apertures comprises from two to eight delivery apertures, more preferably three to five delivery apertures, for example four delivery apertures. Preferably, a said sub-array of delivery apertures corresponding to a said longitudinal row of biscuits is arranged to deliver flavouring composition at a total flow rate of from 1.0 to 32 ml/minute, preferably from 1.5 to 20 ml per minute, for example from 1.5 to 16 ml per minute. In general the number of delivery apertures per row of biscuits will be related to the dimensions of the biscuit. The use of a number of delivery apertures to deliver flavouring composition to a biscuit, the flow rate per aperture being relatively low, enables the flavouring to be relatively uniformly applied across the surface of the biscuit, thus avoiding the occurrence of large regions of high or low intensity flavouring that will be detrimental to the perceived flavour of the biscuit.

Advantageously, the array comprises at least one transversely extending row of delivery apertures. Preferably, the row of delivery apertures is divided into a plurality of sub-arrays each consisting of a multiplicity of delivery apertures arranged in a row.

In one embodiment of the invention, the conveyor device is arranged to travel past the array at a velocity of from 1 to 30 metres per minute, preferably 5 to 25 metres per minute, for example 10 to 25 metres per minute. It is also possible to use higher conveyor velocities, and in that case it will be preferred for higher flow rates of flavouring composition to be used, for example flow rates of from 3 to 6 ml per minute through each delivery aperture.

In certain embodiments, the apparatus of the invention is arranged to present the biscuits in longitudinal rows in which there is little or no space between adjacent biscuits within a row. In those embodiments, the apparatus preferably further comprises means for arranging the biscuits on the conveyor device in longitudinally extending rows in which, in each row, a leading edge of each subsequent biscuit is immediately adjacent to a trailing edge of the preceding biscuit. Mechanical devices for arranging biscuits sequentially in longitudinal rows are well-known and widely used in the field of biscuit manufacture.

In certain embodiments, the apparatus further comprises a sensor device for detecting the presence of biscuits on the conveyor device, the sensor device being connected to a control system for the delivery devices for controlling the delivery of flavouring composition according to whether biscuits are present. In some embodiments the sensor device may be arranged to detect an interruption in an otherwise continuous row of biscuits of the kind described in the previous paragraph. In other embodiments, the biscuits are spaced apart from one another within the longitudinal row and the sensor device is arranged to coordinate flavour delivery with the presence of each biscuit as it passes the flavouring station. The absence of biscuits may mean that there has been an interruption in the supply of biscuits to the conveyor or that a gap has inadvertently been formed between one biscuit and the subsequent biscuit. The control system may be arranged to stop delivery of the flavouring composition when the absence of a biscuit is detected and to resume delivery of the flavouring composition when a biscuit is again registered. Those embodiments enable the delivery of flavouring composition onto the conveyor between biscuits to be minimised, thereby controlling wastage.

The invention further provides a process for the manufacture of flavoured biscuits, comprising:
conveying a multiplicity of biscuits received on a conveyor device past a flavouring station;
delivering to the upper surface of each biscuit, at said flavouring station, a stream of flavouring composition:
   wherein the flavouring composition is delivered through a plurality of delivery apertures at a flow rate of from 0.25 to 6ml per minute in each aperture.

The flow rates indicated above per aperture are relatively low and in general require care to be taken to maintain the desired flow rate. In a preferred arrangement there is used a time and pressure-controlled liquid dispenser system having a multiplicity of delivery heads each housing a respective delivery aperture defined by a nozzle, which may have a nozzle diameter of for example 150 µm, and a microvalve for regulating the feed of liquid to the nozzle. Liquid to be delivered is stored in a common pressurized reservoir arranged to feed the liquid under pressure to the delivery heads. A suitable pressure can be selected in dependence on the configuration of the nozzle and liquid feed arrangement. For example, in some circumstances a pressure of 1 bar may be appropriate in the reservoir, whereas in other circumstances higher pressures, for example, 2 to 3 bar may be appropriate. When the microvalve is opened, liquid is caused to flow through the nozzle. The microvalve may be switched on and off at a range of rates. At higher frequencies (for example, 10 to 20 Hz), the liquid is emitted from the nozzle as a well-defined jet. In one suitable form of delivery system, pulses of liquid of volume at least 200nl are generated.. By way of illustration, the microvalves may be switched at a frequency of 15Hz (900 pulses per minute) thereby producing liquid pulses of 417nl which, at that frequency, coalesce to form a continuous stream of liquid emitted from the nozzle in the form of an essentially laminar jet.

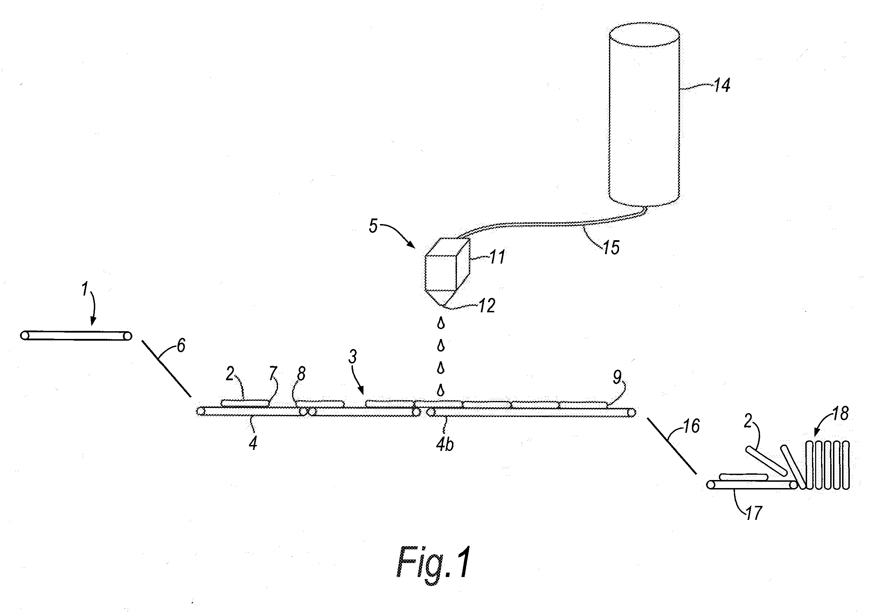

One illustrative embodiment of the invention will now be described with reference to the accompanying drawings in which:
F ig. 1 is a schematic side view of a biscuit processing system incorporating an apparatus according to the invention;
F ig, 2 is a plan view of the apparatus according to the invention; and
F ig. 3 is a perspective view of a flavouring device for use at the flavouring station of the apparatus shown in Fig. 1

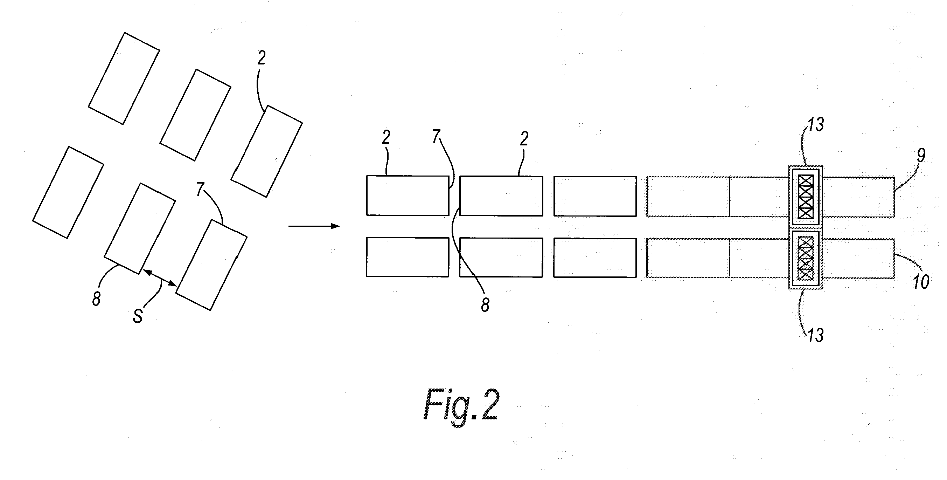

With reference to Fig. 1 and Fig 2, a biscuit processing system includes a first conveyor device 1 delivering biscuits 2 received from an upstream oven. A second conveyor device 3 comprising conveyor 4 is arranged downstream of the conveyor 1. A flavouring station 5 is provided along the conveyor device 3. The biscuits on conveyor device 1 are positioned in rows extending longitudinally along the direction of travel of the conveyor 1, each biscuit in each longitudinal row being spaced apart from the succeeding biscuit in the row by a spacing S. Between the downstream end of the conveyor device 1 and the upstream end of the conveyor 4 is arranged an inclined plate 6 for receiving biscuits from conveyor device 1 and feeding them to conveyor belt 4. Conveyor 4 includes a portion 4b in the vicinity of the flavouring station 5, the portion 4b being movable at a velocity different from that of the upstream portion of the conveyor 4.The inclined plate 6 is provided with a multiplicity of elongate members extending in the transport direction and defining between them lanes, each lane being for receiving and aligning biscuits. The travel speed of conveyor 4 is so selected relative to the travel speed of the conveyor device 1 and the conveyor portion 4b that, after biscuits are transferred under gravity from conveyor 1 along the inclined plate 6 to conveyor 4, the spaces between the biscuits in each longitudinally extending row are substantially eliminated such that the leading edge 7 of each succeeding biscuit in a row is closely adjacent to or in abutment with the trailing edge 8 of the immediately preceding biscuit. In that way, there is formed on the conveyor portion 4b a number of advancing rows 9, 10 of biscuits in which each row is substantially continuous, that is, with no or substantially no spacing between the advancing biscuits. The alignment and formation of the biscuits into continuous rows is shown schematically in Fig. 2. As mentioned above, the biscuits may instead be delivered in spaced-apart relationship, and in that case it is preferable for a sensor device to be provided. The flavouring station can then be arranged, in dependence on signals received from the sensor device, to deliver flavouring only at those times at which a biscuit is positioned to receive the delivered flavouring.

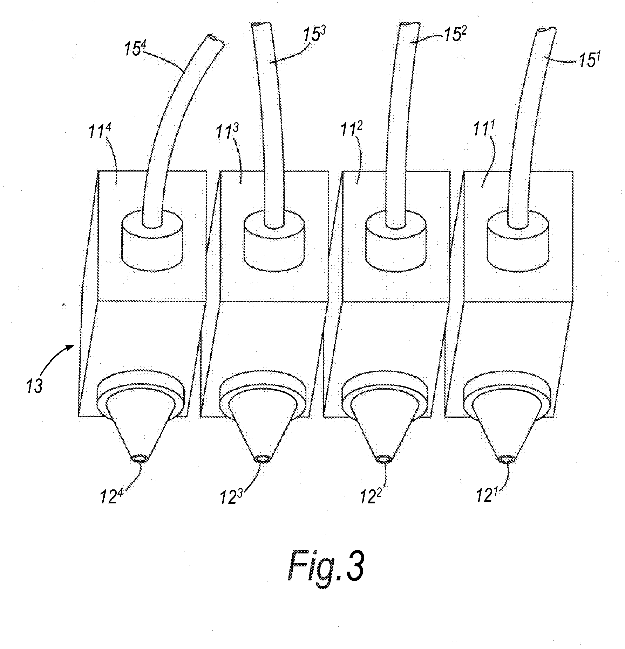

With reference to Figs. 1 and 3, the flavouring station 5 includes a transversely extending row of delivery heads 11, each delivery head including a nozzle 12 defining a delivery aperture for the delivery of liquid. Only one delivery head is included in Fig. 1 for ease of illustration. The row of delivery heads 11 providing an array of a multiplicity of nozzles 12 each defining a respective delivery aperture is divided into sub-arrays 13 of four delivery heads 111 to 114, which are arranged in a row within the respective sub-array 13. Each sub-array 13 having four nozzles is associated with a respective advancing row 9, 10 of biscuits. In the description that follows reference is made to a single sub-array 13 and a single row 9 of advancing biscuits. It will be appreciated, however, that in practice there will be a number of rows of advancing biscuits and a corresponding number of sub-arrays. For example, there may be from 2 to 20 rows of advancing biscuits.

Flavouring composition to be delivered through the nozzles 12 is stored in a pressurised buffer tank 14 which is connected to each sub-array by feed line 15. Within each sub-array, the flow is divided into four streams, which are each delivered via a respective microvalve to a respective nozzle 12. The microvalves are opened and closed at relatively high frequency, for example 15 Hz, causing the liquid to be delivered in a series of small pulses to the nozzle 12. The nozzle geometry and the frequency of pulsing are such that the liquid is emitted from the nozzle in a continuous and essentially laminar jet. In that way, even when operating at the low flow rates per nozzle according to the invention it is possible to obtain substantially continuous delivery of the stream of flavour.

If desired, a sensor device (not shown) may be provided for detecting the presence or absence of biscuits. For example, an optical sensor may be provided in association with the delivery head. The sensor device is advantageously connected to the control system for the delivery head. If the absence of a biscuit is detected by the sensor device, a signal is sent to the control system and the delivery of liquid can be discontinued until such time as the feed of biscuits is resumed.

As already mentioned, it would be possible to include a sensor device that continuously detects the presence or absence of a biscuit at the flavouring station, the signals from the device being used by the control system to control delivery of flavouring such that flavouring is delivered intermittently in coordination with biscuit delivery, thereby allowing any wastage of flavouring to be minimised in an arrangement where the biscuits are delivered in spaced-apart relationship.

In a typical apparatus according to the invention the number of biscuits passing the flavouring station in each longitudinal row may be from 50 to 200 per minute, preferably 75 to 150 per minute, with the number of longitudinal rows being, for example, from 10 to 30, preferably from 15 to 25. The biscuits will generally be planar with a substantially flat upper surface, although biscuits having a patterned upper surface, for example as in Viennese biscuits or wafers may also be flavoured using the apparatus of the invention. The biscuits may be of any shape, for example, round, square, rectangular, oval. Biscuit shapes with straight, parallel sides offer certain advantages in allowing arrangement of the biscuits without intervening gaps in the longitudinal rows thereby reducing potential flavour wastage and/or avoiding the need for interruption of the flow between biscuits. The biscuits' upper surface to which the flavour is to be applied advantageously has a diameter of from 3 to 10cm, for example, from 4 to 8cm. Where the upper surface is not round, the term "diameter" is to be understood as referring to the maximum dimension of the upper surface. The biscuits may weigh, for example, 10 to 20g each, preferably 12 to 18g each, especially 14 to 16g each.

After application of the flavouring composition in the flavouring station, the biscuits may be collected, for example using an inclined plate 16 and conveyor device 17 as shown in Fig. 1 and stacked at stacking station 18 for packaging. If desired, the biscuits may be subjected to further processing, for example coating or enrobing with chocolate, before packaging.

## Claims

1. An apparatus for flavouring biscuits, comprising:
a conveyor device for conveying a multiplicity of biscuits along a longitudinal path; and
a flavouring station comprising a flavour delivery device having an array of delivery apertures, the array being arranged above, and extending transversely across, said longitudinal path;
wherein the delivery device is arranged to deliver to the surface of the biscuits a liquid flavouring composition via each delivery aperture at a flow rate of from 0.25 to 6 ml per minute.

2. An apparatus according to claim 1, wherein the arrangement is such that the array of delivery apertures delivers from 0.01 to 0.15g flavouring per biscuit that passes under it.

3. An apparatus according to claim 1 or claim 2, wherein the arrangement is such that the array of delivery apertures delivers from 0.0005 to 0.0100g flavouring per g of biscuit

4. An apparatus according to any one of the preceding claims, wherein the conveyor device is arranged to convey a multiplicity of longitudinal rows of biscuits, and the array of delivery apertures comprises a sub-array of delivery apertures corresponding to each longitudinal row of biscuits, each sub-array comprising two or more delivery apertures.

5. An apparatus according to claim 4, in which a said sub-array of delivery apertures corresponding to a said longitudinal row of biscuits is arranged to deliver flavouring composition at a flow rate of from 1 to 16 ml/minute.

6. An apparatus according to any one of claims 1 to 5, wherein the array comprises at least one transversely extending row of delivery apertures.

7. An apparatus according to any one of claims 1 to 6, wherein the delivery device includes pulse-generating means for delivering the liquid flavouring composition to the delivery apertures.

8. An apparatus according to any one of claims 1 to 7, wherein the delivery device comprises valve means for controlling delivery of liquid flavouring composition to each delivery aperture.

9. An apparatus according to claim 8, wherein the valve means comprises a respective valve device arranged to deliver liquid flavour composition to each delivery aperture.

10. An apparatus according to any one of claims 1 to 9, wherein the conveyor device is arranged to travel past the array at a velocity of from 1 to 30 metres per minute.

11. An apparatus according to any one of the preceding claims, further comprising means for arranging the biscuits on the conveyor device in longitudinally extending rows.

12. An apparatus according to any one of claims 1 to 11, further comprising a sensor device for detecting the presence of biscuits on the conveyor device, the sensor device being connected to a control system for the delivery devices for controlling the delivery of flavouring composition according to whether a biscuit is present at the flavouring station.

13. A process for the manufacture of flavoured biscuits, comprising:
conveying a multiplicity of biscuits received on a conveyor device past a flavouring station;
delivering to the upper surface of each biscuit, at said flavouring station, a plurality of droplets of flavouring:
wherein the flavouring composition is delivered through a plurality of delivery apertures at a flow rate of from 0.25 to 6ml per minute in each aperture.

14. A process according to claim 13, wherein the biscuits are conveyed past the flavouring station in longitudinal rows at a velocity such that the number of biscuits in each row passing the flavouring station is from 50 to 200 per minute.

15. A process according to claim 14, wherein the biscuits are so arranged in each longitudinal row that, during normal operation, the row is uninterrupted by spaces between adjacent biscuits.

16. A process according to claim 14, wherein the biscuits are so arranged in each longitudinal row that, during normal operation, each biscuit is spaced apart from the preceding and succeeding biscuits in the row.

17. A process according to any one of claims 13 to 16, wherein the biscuits each weigh from 10 to 20g.

18. A process according to any one of claims 13 to 17, wherein the biscuits have a diameter of from 3 to 10cm.

19. A process according to any one of claims 13 to 18, wherein the flavouring composition is delivered to each biscuit through two or more delivery apertures, each of which delivers the flavouring at a flow rate of from 0.25 to 6ml per minute.
